# EUROPÄISCHE PATENTSCHRIFT

(11) **EP 0 785 816 B1**
(45) Veröffentlichungstag und Bekanntmachung des Hinweises auf die Patenterteilung: **23.12.1998**
(21) Anmeldenummer: 95936481.1
(22) Anmeldetag: 12.10.1995
(51) Int. Cl.: B01D 33/052, B30B 9/24

(54) **VORRICHTUNG ZUR ENTWÄSSERUNG UND BZW. ODER WÄSCHE VON SUSPENSIONEN, INSBESONDERE FASERSTOFFSUSPENSIONEN**
DEVICE FOR DEWATERING AND/OR WASHING SUSPENSIONS, IN PARTICULAR SUSPENSIONS OF FIBROUS MATERIALS
DISPOSITIF DE DESHYDRATATION ET/OU DE LAVAGE DE SUSPENSIONS, NOTAMMENT DE SUSPENSIONS DE MATIERES FIBREUSES

(30) Priorität: 14.10.1994 AT 1944/94
(43) Veröffentlichungstag der Anmeldung: 30.07.1997
(73) Patentinhaber: Andritz-Patentverwaltungs-Gesellschaft m.b.H., 8045 Graz (AT)
(72) Erfinder: PETSCHAUER, Franz, A-8502 Lannach (AT); SBASCHNIGG, Johann, A-8045 Graz (AT); MAUSSER, Wilhelm, A-8047 Graz (AT)
(74) Vertreter: Schweinzer, Friedrich
(86) Internationale Anmeldenummer: EP9504022
(87) Internationale Veröffentlichungsnummer: WO9611734

(56) Entgegenhaltungen:
- EP-A- 0 013 548
- EP-A- 0 331 834
- EP-A- 0 454 989
- EP-A- 0 596 856
- US-A- 3 915 865

## Beschreibung

Die Erfindung betrifft eine Vorrichtung zur Entwässerung und bzw. oder Wäsche von Suspensionen, insbesondere Faserstoffsuspensionen, mit zwei gegenläufg drehenden Entwässerungswalzen, wobei zumindest zwei weitere Führungswalzen, insbesondere Presswalzen, vorgesehen sind, und über jeweils eine Entwässerungswalze und jeweils eine weitere Führungswalze ein, endloses, Sieb- oder Filterband geführt ist, wodurch die zu entwässernde bzw. zu waschende Suspension im von den beiden Bändern gebildeten Spalt geführt und entwässert wird.

Die bekannten Vorrichtungen weisen zum Teil nur zwei gegenläufig drehende Entwässerungswalzen auf bzw. stellen sogenannte Doppelsiebentwässerungsaggregate dar, bei denen zusätzlich zu den Entwässerungswalzen weitere Führungswalzen und entsprechende Sieb- oder Filterbänder zur Entwässerung vorgesehen sind. Die meisten dieser Vorrichtungen weisen weiters einen horizontalen Verlauf der gegeneinander geführten Sieb- oder Filterbänder auf. Derartige Vorrichtungen werden vorteilhaft zur Enfwässerung, insbesondere von Faserstoffsuspensionen, eingesetzt, bieten aber nicht die Möglichkeit einer Wäsche der Suspension. Soll die Suspension für unterschiedliche Anwendungen einmal gewaschen und einmal ohne Wäsche entwässert werden, sind bei den bekannten Vorrichtungen große Umstellungen bzw. Umbauten erforderlich.

Die EP-A-0 454 989 beschreibt einen Vertikalformer mit verschiedenen Formierelementen, bei dem die Suspension in den Spalt zwischen den Bändern eingedüst wird. Die erste Entwässerung findet hier im Walzenspalt statt.

Die EP-A-0 311 834 beschreibt eine Entwässerungsvorrichtung, bei der mittels Entwässerungszahnrädern Schlamm, Früchte und Gemüse oder Abfälle von gepreßten Früchten oder Gemüse entwässert werden. Dabei wird das zu entwässernde Gut über einen Schacht, der oberhalb der Entwässerungszahnrädern angebracht ist, fällt dann auf die Entwässerungszahnrädern und die Bänder. Die Bänder werden um das jeweilige Entwässerungszahnrad, eine Umlenkwalze sowie eine (Band-) Entwässerungswalze geführt. Wichtig in diesem Stand der Technik ist, daß die Bänder möglichst kurz aneinanderliegen, um den Verschleiß zu verringern.

Die US-A-3,915,865 beschreibt eine Entwässerungsvorrichtung, bei der ein Schlamm erst über eine horizontale Strecke geführt und schwerkraftentwässert wird. Dann werden mittels Preßwalzen die Bänder umgelenkt und zu einem vertikalen von oben nach unten verlaufenden Spalt Zusammengeführt.

Ziel der Erfindung ist es, eine universell einsetzbare Vorrichtung zur Entwässerung und gegebenenfalls zur Wäsche von Suspensionen zu schaffen.

Die Erfindung ist daher dadurch gekennzeichnet, daß der von den beiden Bändern gebildete Spalt vertikal verläuft und im Bereich dieses vertikalen Spaltes eine Einrichtung zur Führung der Bahn vorgesehen ist, wobei diese Einrichtung als Führungswalze oder als Führungs- oder Gleitschuh ausgebildet sein kann. Durch die Anordnung eines vertikalen Spalts wird einerseits eine Nachbefeuchtung des bereits trockneren Materials vermieden und andererseits kann auf geringster Grundfläche eine hohe Durchsatzleistung erzielt werden. Durch die Anordnung einer Einrichtung zur Führung der Bahn, wie dies z.B. eine Führungswalze oder ein Führungs- oder Gleitschuh sein kann, wird erreicht, daß die Bänder im Bereich des vertikalen Spaltes immer unter einem entsprechenden Druck stehen und somit die notwendige Entwässerung gewährleisten.

Eine günstige Weiterbildung der Erfindung ist dadurch gekennzeichnet, daß bogenförmige gekrümmte Leitbleche über den Breiten beider Entwässerungswalzen angeordnet sind, sodaß ein verstellbar enger werdender Spalt zwischen den Leitblechen und dem über die Oberflächen der Entwässerungswalzen und in weiterer Folge über die weiteren Führungswalzen laufenden, insbesondere endlosen, Sieb- oder Filterbändern entsteht, wobei die Leitbleche schwenkbar gelagert und gegebenenfalls in zumindest zwei Teilbereiche aufgeteilt sein können, deren Einlaufspalt zur Walzenoberfläche einstellbar ist. Durch die Anordnung von Leitblechen läßt sich besonders günstig der Druck auf die Suspension kontinuierlich erhöhen und somit eine entsprechende Entwässerung erzielen. Bei schwenkbar gelagerten Leitblechen läßt sich dieser Druck entsprechend variieren und einstellen. Durch die Aufteilung der Leitbleche in mehrere Teilbereiche läßt sich besonders günstig an den Bereichsgrenzen Waschflüssigkeit den bereits gebildeten Filterkuchen bzw. der Faserstoffmatte zuführen. Bei geteilten Trennblechen ist auch für den reinen Entwässerungsbetrieb eine gezielterer Druckaufbringung möglich.

Eine günstige Weiterbildung der Erfindung ist dadurch gekennzeichnet, daß zumindest der feststehende Bereich der Leitbleche mit dem unterhalb der Entwässerungswalzen angebrachten Behälter, der zur Aufnahme von Waschflüssigkeit, insbesondere Waschwasser, einen abgetrennten Bereich aufweisen kann, dicht verbunden ist. Dadurch kann die Suspension gezielter der Oberfläche der Walzen zugeführt werden, wobei in einfacher Weise auch eine Trennung zwischen Suspension und Waschflüssigkeit realisiert werden kann.

Eine günstige Ausgestaltung der Erfindung ist dadurch gekennzeichnet, daß die Entwässerungswalzen einen Walzspalt bilden, der im Bereich von bis zu 100 mm, vorzugsweise von 2 mm bis 20 mm, liegt und einstellbar ausgebildet ist, wobei im bevorzugten Bereich die besten Ergebnisse hinsichtlich Entwässerung und Wäsche erzielbar sind.

Eine vorteilhafte Weiterbildung der Erfindung ist dadurch gekennzeichnet, daß die Stoffzufuhr beidseitig und getrennt erfolgt. Dadurch läßt sich besonders günstig eine gleichmäßige Aufteilung und Verteilung der Suspension erzielen.

Eine vorteilhafte Ausgestaltung der Erfindung ist dadurch gekennzeichnet, daß der Stoffauflauf durch radial wirkende Dichtungen zu den Entwässerungswalzen hin abgedichtet ist. Durch diese Ausführung wird insbesondere bei Leckströmungen bereits vorentwässerte Suspension zu den Dichtungen geführt, wodurch sich eine erhöhte Dichtwirkung ergibt. Bei den bisher üblichen Dichtungen tritt durch den erhöhten Druck ein Ausbeulen bzw. Zerstören der Dichtung auf.

Eine günstige Weiterbildung der Erfindung ist dadurch gekennzeichnet, daß der Stoffauflauf aus der Betriebsstellung in eine Reinigungsstellung klappbar bzw. herausfahrbar ausgeführt ist. Durch diese Ausführung läßt sich in einfacher Weise eine Reinigung der Vorrichtung bei Stillständen erreichen.

Eine weitere vorteilhafte Ausgestaltung der Erfindung ist dadurch gekennzeichnet, daß hinter dem, von der über die Entwässetungswalzen und die weiteren Führungswalzen laufenden Bändern gebildeten, vertikalen Spalt nach den weiteren Führungswalzen, insbesondere Preßwalzen, eine Abnahmevorrichtung, insbesondere Stoffaustragsschnecke, für den aus der Suspension gebildeten Filterkuchen bzw. die Faserstoffmatte vorgesehen ist, wobei die Wände der Abnahmevorrichtung als Schaber ausgebildet sein können. Durch den vertikal nach oben verlaufenden Spalt wird eine Nachbefeuchtung des bereits trockenen Filterkuchens bzw. der Faserstoffmatte vermieden, wodurch sich höhere Trockengehalte ergeben. Weiters erfolgt der Stoffaustrag in einer günstigen Höhe für nachfolgende Aggregate, sodaß der Stoff direkt ohne Zwischenaggregat, z.B. in einen Disperger geleitet werden kann. Durch die spezielle Ausbildung der Wände der Abnahmevorrichtung als Schaber erfolgt auch eine gute Ablösung des Filterkuchens bzw. der Faserstoffmatte von den Sieb- bzw. Filterbändern.

Eine günstige Ausgestaltung der Erfindung ist dadurch gekennzeichnet, daß unterhalb der weiteren Führungswalzen, insbesondere Preßwalzen, Filtratabführungen, insbesondere Filtratrinnen, vorgesehen sind. Durch diese Ausgestaltung können unterschiedliche Qualitäten von Filtrat, insbesondere hier sehr reines Pressenfiltrat, aus der Maschine abgeführt und weiteren Verwendungszwecken zugeführt werden.

Eine günstige Weiterbildung der Erfindung ist dadurch gekennzeichnet, daß in Laufrichtung der über die Entwässerungswalzen laufenden Sieb- oder Filterbände gesehen nach der weiteren Führungswalze, insbesondere Preßwalze, und vor der Entwässerungswalze jeweils eine Spannwalze zur Erzeugung und Regulierung der Bandspannung vorgesehen ist, wobei die Spannwalze als Regulierwalze für den Bandlauf ausgebildet sein kann. Dadurch ist nur eine Walze erforderlich, was zu einer kleineren Bauweise führt. Weiters kann dadurch eine aussenliegende Walze entfallen, bei der es zu entsprechenden Stoffablagerungen und Verschmutzungen kommen würde.

Eine günstige Ausbildung der Erfindung ist dadurch gekennzeichnet, daß zumindest eine der weiteren Führungswalzen angetrieben ist, wobei die Hauptlast des Antriebes von der weiteren Führungswalze, insbesondere Preßwalze, aufgenommen werden kann. Dadurch können die Siebzüge in der Gesamteinheit reduziert werden, wodurch die Siebe längere Standzeiten aufweisen.

Eine günstige Ausgestaltung der Erfindung ist dadurch gekennzeichnet, daß die weiteren Führungswalzen eine glatte Oberfläche aufweisen.

Eine vorteilhafte Ausgestaltung der Erfindung ist dadurch gekennzeichnet, daß die weiteren Führungswalzen eine gummierte Oberfläche aufweisen. Die gummierte Oberfläche ist schonender für das Sieb und ermöglicht im Fall einer angetriebenen Walze auch eine bessere Kraftübertragung auf das Sieb.

Eine günstige Ausgestaltung der Erfindung ist dadurch gekennzeichnet, daß die weiteren Führungswalzen eine gerillte Oberfläche oder eine Oberfläche mit Bohrungen aufweisen, wobei sie auch als Lochwalzen ausgebildet sein können. Durch diese Ausführungen läßt sich im Bereich der weiteren Führungswalzen eine besonders gute Abführung des ausgepreßten Wassers erzielen.

Eine vorteilhafte Ausbildung der Erfindung ist dadurch gekennzeichnet, daß eine Abdeckhaube vorgesehen ist. Durch die Abdeckhaube läßt sich eine völlig geschlossene Einheit herstellen, sodaß keinerlei Beeinflussungen der Umgebung der Maschine auftreten.

Eine günstige Ausgestaltung der Erfindung ist dadurch gekennzeichnet, daß die Entwässerungswalzen perforiert ausgebildet sind. Durch die Perforation der Entwässerungswalzen ist auch eine Entwässerung am Umfang der Entwässerungswalzen in das Innere der Walzen möglich, wodurch eine besonders gute Entwässerung erzielt werden kann.

Eine günstige Weiterbildung der Erfindung ist dadurch gekennzeichnet, daß die Entwässerungswalzen in der Walzenoberfläche Rillen aufweisen. Durch eine gerillte Oberfläche der Entwässerungswalzen läßt sich das Filtrat günstig abführen` wobei dies in Kombination mit einer am Grund der Rillen vorgesehenen Perforation der Walze die Entwässerung noch wesentlich verbessert.

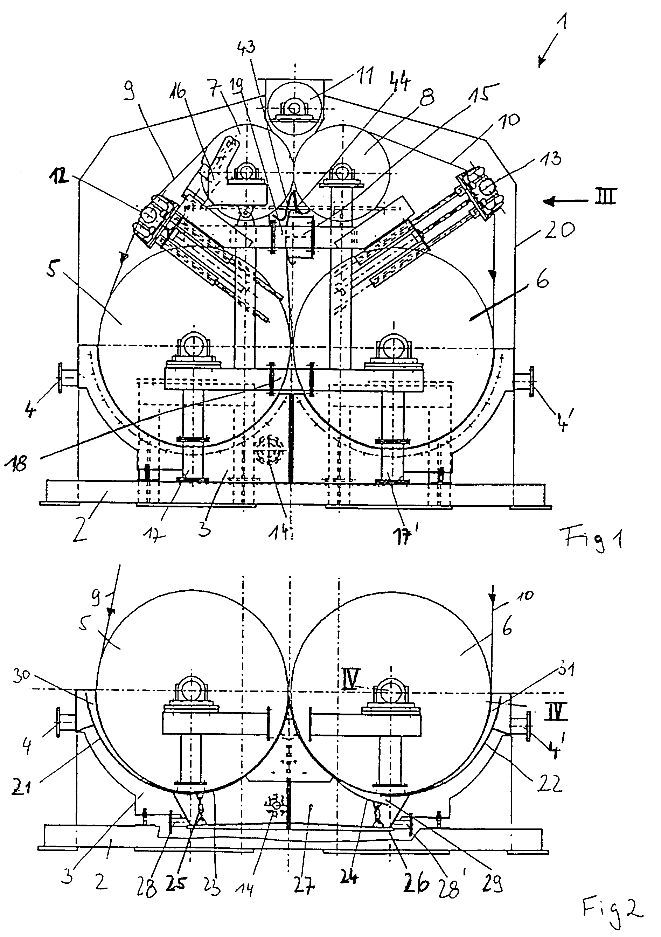

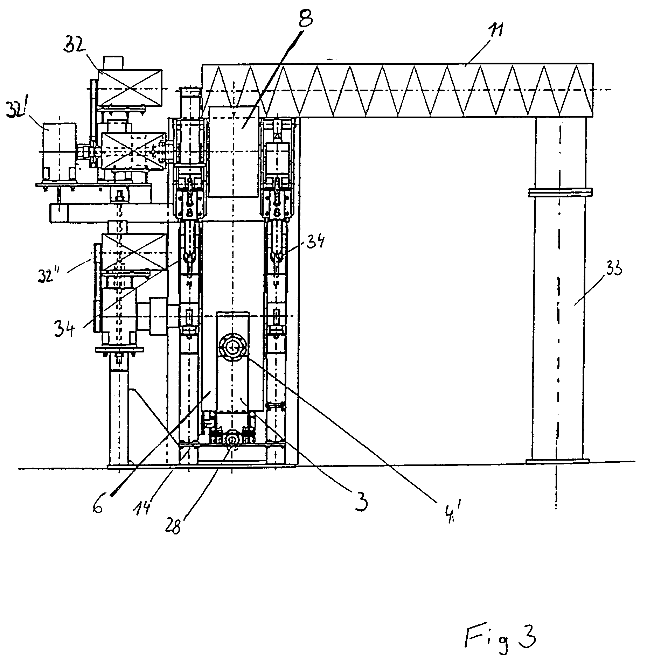

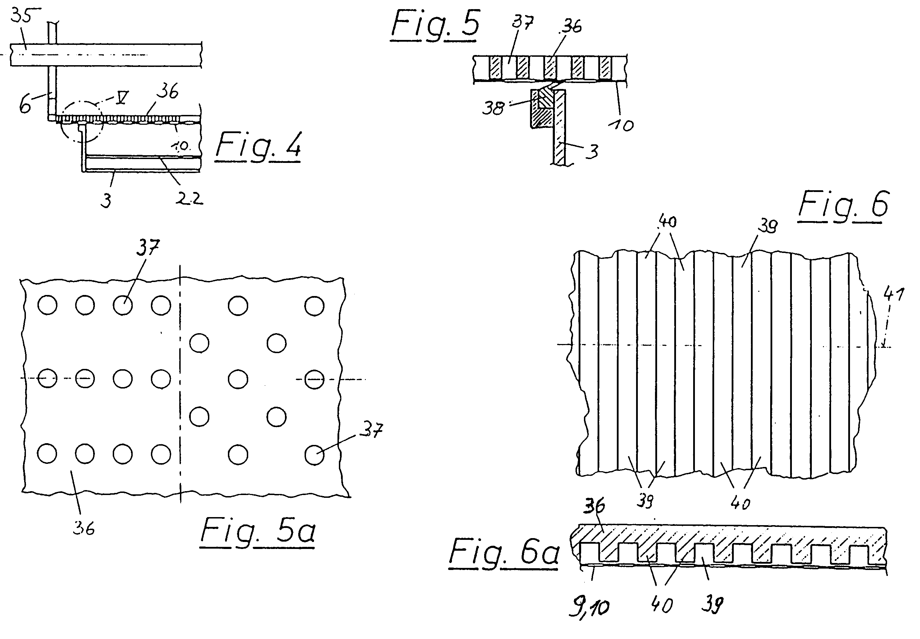

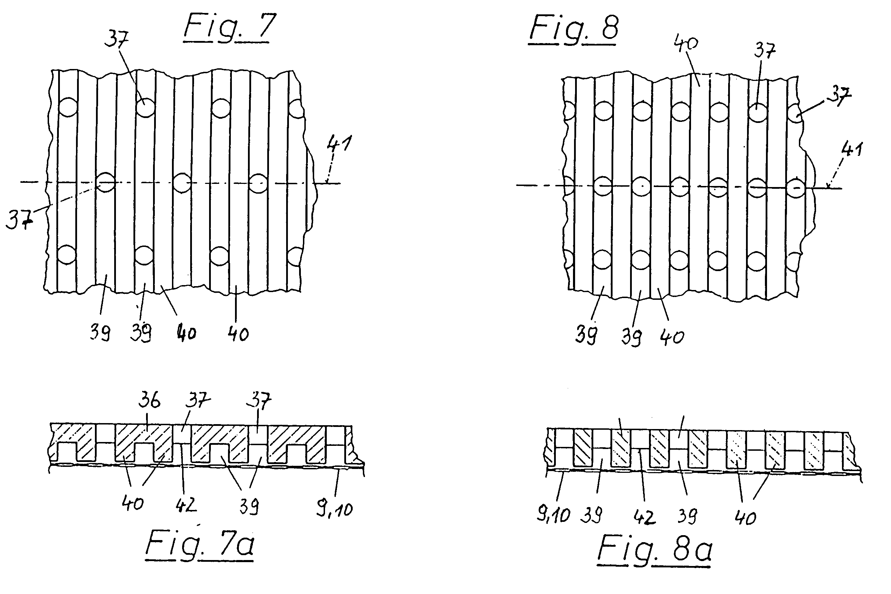

Im folgenden wird die Erfindung anhand der Zeichnungen beispielhaft erläutert, wobei Fig. 1 die Ansicht einer erfindungsgemäßen Vorrichtung, Fig. 2 einen Schnitt durch den unteren Bereich der Vorrichtung gemäß Fig. 1, Fig. 3 eine Ansicht gemäß Pfeil III in Fig. 1, Fig. 4 einen Schnitt gemäß Linie IV-IV in Fig. 2, Fig. 5 einen Ausschnitt V aus Fig. 4, Fig. 5a die Oberfläche einer als Lochwalze ausgebildeten Umlenkwalze, Fig. 6 eine weitere Variante einer Umlenkwalze, Fig. 6a einen Schnitt durch die Fig. 6, Fig. 7 eine Weiterbildung einer Rillenwalze, Fig. 7a einen Schnitt durch Fig. 7, Fig. 8 eine weitere Variante einer Rillenwalze und Fig. 8a einen Schnitt durch Fig. 8 darstellt.

Fig. 1 zeigt eine Ansicht der Entwässerungsvorrichtung 1, die auf einem Fundament 2 gelagert ist. Auf diesem Fundament 2 befindet sich ein Behälter 3, dem über Einlaßstutzen 4, 4' die zu entwässernde bzw. zu waschende Suspension zugeführt wird. Über diesem Behälter 3 befinden sich die Entwässerungswalzen 5, 6 und in weiterer Folge die weiteren Führungswalzen 7, 8, die hier als Preßwalzen ausgebildet sind. Über die Entwässerungswalze 5 und die Preßwalze 7 läuft ein Sieb- oder Filterband 9. Analog wird über die Entwässerungswalze 6 und die Preßwalze 8 ein Sieb- oder Filterband 10 geführt. Zur Stoffabnahme von den Siebbändern 9, 10 ist am Auslaß zwischen den Preßwalzen 7, 8 eine Stoffaustragschnecke 11 angebracht. Die notwendige Spannung der Siebbänder 9, 10 wird durch Spann- und Regulierwalzen 12, 13 erzielt. Im rechten Teil der Abbildung (Entwässerungswalze 6, Preßwalze 8, Siebband 10, Spann- und Regulierwalze 13) ist die Betriebsposition der Spann- und Regulierwalze 13 dargestellt. Im linken Teil ist die Position der Spann- und Regulierwalze 12 im Zustand der Entlastung des Siebes 9 dargestellt, wobei diese Position insbesondere für einen Siebwechsel vorgesehen ist. Im unteren Bereich des Behälters 3 ist weiters ein Zuführstutzen 14 für die Zuführung von Waschflüssigkeit, z.B. Waschwasser vorgesehen. Eine weitere Verbesserung der Bandführung wird durch einen Führungsschuh 15 errreicht, der im Bereich der gemeinsamen Führung der Siebbänder 9 und 10 zwischen den Entwässerungswalzen 5, 6 und den Preßwalzen 7,8 installiert ist. Dadurch wird die erforderliche Stabilisierung der Bahn und die Erzeugung des notwendigen Drucks im vertikalen Spalt erreicht. Zur Erzeugung des erforderlichen Preßdrucks ist die Preßwalze 7 mittels eines durch einen Hydraulik- bzw. Pneumatikzylinder kippbaren Hebels 16 an die Preßwalze 8 anpreßbar. Zum Wechsel der endlosen Siebe 9 bzw. 10 ist die Vorrichtung voll kantilleverbar. Dazu sind in der Stuhlung demontierbare Einsatzstücke 17, 17', 18 und 19 vorgesehen, sodaß das endlose Siebband 9 bzw. 10 ohne Demontage der Walzen aus der Vorrichtung gezogen und durch ein neues Siebband ersetzt werden kann. Über dem Behälter 3 und den darin befindlichen Walzen ist eine Abdeckhaube 20 angebracht, sodaß allfällige Beeinträchtigungen der Umgebungen bzw. des Betriebspersonals durch Schwadenbildungen oder allfällige Dämpfe vermieden werden. Unterhalb der Preßwalzen 7, 8 sind Filtratrinnen 43, 44 vorgesehen, über die das Pressenfiltrat der Maschine abgeführt werden kann.

In Fig. 2 ist ein Schnitt durch den unteren Bereich von Fig. 1 dargestellt. Gleiche Elemente wurden mit gleichen Bezugszeichen bezeichnet. Hier ist speziell die Anordnung der Leitbleche bzw. Leitblechabschnitte 21, 22, 23, 24 zu erkennen. Im linken Teil ist die Funktion der Vorrichtung als Entwässerungs- oder Eindickaggregat dargestellt. Hier sind die Leitblechabschnitte 21 und 23 so eingestellt, daß sie einen kontinuierlich verengenden Spalt 30 zur Oberfläche der Entwässerungswalze 5 bzw. zum über die Entwässerungswalze 5 laufenden Sieb 9 bilden. Der Leitblechabschnitt 23 ist dabei durch einen Zylinder 25 an den Auslauf des Leitblechabschnittes 21 angepreßt. Auf der rechten Seite der Fig. 2 ist die Funktion der Vorrichtung als Wäscher dargestellt. Der feststehende Leitblechabschnitt 22 bildet dabei zur Oberfläche der Entwässerungswalze 6 bzw. zum über die Entwässerungswalze 6 laufenden Sieb 10 einen sich verengenden Spalt 31. Der Behälter 3 weist einen Bereich 27 auf, in dem durch einen Einlaßstutzen 14 Waschflüssigkeit, z.B. Waschwasser, zugeführt wird. Dieses Waschwasser tritt dann durch einen vom Leitblechabschnitt 24 zum Leitblechabschnitt 22 gebildeten Spalt 29 in den Spalt 31 ein, wodurch eine Verdrängungswäsche im gebildeten Filterkuchen bzw. in der gebildeten Faserstoffmatte erfolgt. Die Breite des Spaltes 29 und damit auch die zugeführte Menge an Waschflüssigkeit wird durch einen Zylinder 26 eingestellt. Das Filtrat kann in einen Auffangbehälter unterhalb der Entwässerungswalzen 5 bzw. 6 geleitet und von dort durch Auslaßstutzen 28 bzw. 28' abgeleitet werden.

Fig. 3 zeigt eine Ansicht gemäß Pfeil III in Fig. 1, wobei neben dem Antrieb 32 der Stoffaustragschnecke 11 auch die Antriebe 32' für die Preßwalze 8 und der Hauptantrieb 32'' für die Entwässerungswalze 6 dargestellt sind. Am Ende der Stoffaustragsschnecke 11 befindet sich ein Schacht 33. Weiters sind die Stellzylinder 34 für die Spann- und Regulierwalzen erkennbar.

Der in Fig. 4 dargestellte Schnitt zeigt die Entwässerungswalze 6, die als Lochwalze ausgebildet ist. Die hohle Walze 6 wird hierbei auf einer Welle 35 befestigt. Über den gelochten Walzenmantel 36 läuft das Sieb 10. Weiters ist das mit dem Behälter 3 verbundene Leitblech 22 dargestellt. Der Ausschnitt V in Fig. 5 zeigt besonders die Abdichtung 38 des Behälters 3 gegenüber dem Sieb 10, wobei hier auch die Löcher 37 des gelochten Walzenmantels 36 zu sehen sind.

In Fig. 5a ist die Oberfläche einer als Lochwalze ausgebildeten Entwässerungswalze 5 bzw. 6 dargestellt. Dabei können die Löcher 37 in Reihen, im linken Teil gezeigt, bzw. wie im rechten Teil die Figur versetzt über dem Walzenmantel 36 angeordnet sein.

Fig. 6 zeigt eine weitere Variante einer Entwässerungswalze 5 bzw. 6, die als Rillenwalze ausgebildet ist. Fig. 6a zeigt diese Walze im Schnitt. Hier verlaufen abwechselnd Rillen 39 mit Stegen 40 in Umfangsrichtung über den Mantel 36 der Walze 5 bzw. 6, die um eine Achse 41 drehbar gelagert ist. Auf den Stegen 40 liegt dann das Sieb 9 bzw. 10 auf (siehe Fig. 6a).

Fig. 7 bzw. Fig. 7a zeigen eine Weiterbildung einer Rillenwalze 5 bzw. 6, wobei im Grund 42 der Rillen 39 versetzt angeordnete Löcher 37 im Walzenmantel 36 vorgesehen sind. Die dazwischenliegenden Nuten 39 bilden in der Schnittebene einen Kanal. Die Löcher 37 können aber auch wie in den Fig. 8 bzw. 8a, in Reihe angeordnet sein.

Die Erfindung ist nicht auf die in den Zeichnungen dargestellten Ausführungen beschränkt. Es können z.B. die Leitbleche in mehr als zwei Abschnitte unterteilt sein. Für ein reines Entwässerungsaggregat ist auch eine einzelne Suspensionszufuhr denkbar. Weiters ist eine Aufsplittung und unterschiedliche Verwendung der Filtrate unterschiedlicher Qualitäten möglich.

## Patentansprüche

1. Vorrichtung zur Entwässerung und bzw. oder Wäsche von Suspensionen, insbesondere Faserstoffsuspensionen, mit zwei gegenläufig drehenden Entwässerungswalzen (5, 6), wobei zumindest zwei weitere Führungswalzen (7, 8), insbesondere Presswalzen, vorgesehen sind, und über jeweils eine Entwässerungswalze (5, 6) und jeweils eine weitere Führungswalze (7, 8) ein, insbesondere endloses, Sieb- oder Filterband (9, 10) geführt ist, wodurch die zu entwässernde bzw. zu waschende Suspension im zwischen den Entwässerungswalzen (5, 6) und den Führungswalzen (7, 8) von den beiden Bändern (9, 10) gebildeten Spalt geführt und entwässert wird, wobei der Spalt vertikal von unten nach oben verläuft und im Bereich dieses vertikalen Spaltes eine Einrichtung (15) zur Führung der Bahn vorgesehen ist, dadurch gekennzeichnet, daß die Entwässerungswalzen (5, 6) einander gegenüber und über einem Zufuhrbehälter (3) angeordnet sind, so daß ein Teil des Umfanges der Entwässerungswalzen (5, 6) in den Behälter (3) hineinragt, sowie daß die Einrichtung (15) zur Führung der Bahn als Führungswalze oder als Führungs- oder Gleitschuh ausgebildet ist.

2. Vorrichtung nach Anspruch 1, dadurch gekennzeichnet, daß bogenförmig gekrümmte Leitbleche (21, 22, 23, 24) über den Breiten beider Entwässerungswalzen (5, 6) angeordnet sind, so daß jeweils ein verstellbar enger werdender Spalt (30, 31) zwischen den Leitblechen (21, 22, 23, 24) und den über die Oberflächen der Entwässerungswalzen (5, 6) und in weiterer Folge über die weiteren Führungswalzen (7, 8) laufenden, insbesondere endlosen, Sieb- oder Filterbändern (9, 10), entsteht, die in den vertikal nach oben verlaufenden Spalt münden.

3. Vorrichtung nach Anspruch 2, dadurch gekennzeichnet, daß die Leitbleche (21, 22, 23, 24) schwenkbar gelagert sind.

4. Vorrichtung nach Anspruch 2 oder 3, dadurch gekennzeichnet, daß die Leitbleche in zumindest zwei Teilbereiche (21, 23 bzw. 22, 24) aufgeteilt sind, deren Einlaufspalt (30, 31) zur Walzenoberfläche einstellbar ist.

5. Vorrichtung nach einem der Ansprüche 2 bis 4, dadurch gekennzeichnet, daß zumindest der feststehende Bereich der Leitbleche (21, 22) mit dem unterhalb der Entwässerungswalzen (5, 6) angebrachten Behälter (3), der zur Aufnahme von Waschflüssigkeit, insbesondere Waschwasser, einen abgetrennten Bereich (27) aufweisen kann, dicht verbunden ist.

6. Vorrichtung nach einem der Ansprüche 1 bis 5, dadurch gekennzeichnet, daß die Entwässerungswalzen (5, 6) einen Walzspalt bilden, der im Bereich bis zu 100 mm, vorzugsweise 2 mm bis 20 mm, liegt und einstellbar ausgebildet ist.

7. Vorrichtung nach einem der Ansprüche 1 bis 6, dadurch gekennzeichnet, daß die Stoffzufuhr (4, 4') beidseitig und getrennt erfolgt.

8. Vorrichtung nach einem der Ansprüche 1 bis 7, dadurch gekennzeichnet, daß der Stoffauflauf (3) durch radial wirkende Dichtungen (38) zu den Entwässerungswalzen (5, 6) hin abgedichtet ist.

9. Vorrichtung nach einem der Ansprüche 1 bis 8, dadurch gekennzeichnet, daß der Stoffauflauf (3) aus der Betriebsstellung in eine Reinigungsstellung abklappbar bzw. herausfahrbar ausgeführt ist

10. Vorrichtung nach einem der Ansprüche 1 bis 9, dadurch gekennzeichnet, daß hinter dem von den über die Entwässerungswalzen (5, 6) und die weiteren Führungswalzen (7, 8) laufenden Bändern (9, 10) gebildeten vertikalen Spalt, nach den weiteren Führungswalzen (7, 8), insbesondere Preßwalzen, eine Abnahmevorrichtung (11), insbesondere Stoffaustragsschnecke, für den aus der Suspension gebildeten Filterkuchen bzw. die Faserstoffmatte vorgesehen ist.

11. Vorrichtung nach Anspruch 10, dadurch gekennzeichnet, daß die Wände der Abnahmevorrichtung (11) als Schaber ausgebildet sind.

12. Vorrichtung nach einem der Ansprüche 1 bis 11, dadurch gekennzeichnet, daß unterhalb der weiteren Führungswalzen (7, 8), insbesondere Preßwalzen, Filtratabführungen, insbesondere Filtratrinnen (43, 44), vorgesehen sind.

13. Vorrichtung nach einem der Ansprüche 1 bis 12, dadurch gekennzeichnet, daß in Laufrichtung der über die Entwässerungswalzen (5, 6) laufenden Sieb- oder Filterbänder (9, 10) gesehen nach der weiteren Führungswalze(7, 8), insbesondere Preßwalze, und vor der Entwässerungswalze (5, 6) jeweils eine Spannwalze (12, 13) zur Erzeugung und Regulierung der Bandspannung vorgesehen ist.

14. Vorrichtung nach Anspruch 13, dadurch gekennzeichnet, daß die Spannwalze (12, 13) als Regulierwalze für den Bandlauf ausgebildet ist.

15. Vorrichtung nach einem der Ansprüche 1 bis 14, dadurch gekennzeichnet, daß zumindest eine der weiteren Führungswalzen (7, 8) angetrieben ist.

16. Vorrichtung nach Anspruch 15, dadurch gekennzeichnet, daß die Hauptlast des Antriebes (32') von der weiteren Führungswalze (7, 8), insbesondere Preßwalze, aufgenommen wird.

17. Vorrichtung nach einem der Ansprüche 1 bis 16, dadurch gekennzeichnet, daß die weiteren Führungswalzen (7, 8) eine glatte Oberfläche aufweisen.

18. Vorrichtung nach einem der Ansprüche 1 bis 17, dadurch gekennzeichnet, daß die weiteren Führungswalzen (7, 8) eine gummierte Oberfläche aufweisen.

19. Vorrichtung nach einem der Ansprüche 1 bis 18, dadurch gekennzeichnet, daß die weiteren Führungswalzen (7, 8) eine gerillte Oberfläche aufweisen.

20. Vorrichtung nach einem der Ansprüche 1 bis 18, dadurch gekennzeichnet, daß die weiteren Führungswalzen (7, 8) eine Oberfläche mit Blindbohrungen aufweist.

21. Vorrichtung nach einem der Ansprüche 1 bis 17, dadurch gekennzeichnet, daß die weiteren Führungswalzen (7, 8) als Lochwalzen ausgebildet sind.

22. Vorrichtung nach einem der Ansprüche 1 bis 21, dadurch gekennzeichnet, daß eine Abdeckhaube (20) vorgesehen ist.

23. Vorrichtung nach einem der Ansprüche 1 bis 22, dadurch gekennzeichnet, daß die Entwässerungswalzen (5, 6) perforiert ausgebildet sind.

24. Vorrichtung nach einem der Ansprüche 1 bis 23, dadurch gekennzeichnet, daß die Entwässerungswalzen (5, 6) in der Walzenoberfläche (36) Rillen (39) aufweisen.

## Claims

1. Device for the dewatering and/or washing of suspensions, primarily fibre stock suspensions, with two counter-rotating dewatering rolls (5, 6), where at least two further guide rolls (7, 8), specifically press rolls, are provided and where a - specifically endless - wire belt or filter belt (9, 10), is guided in each case via a dewatering roll (5, 6) and another guide roll (7, 8), causing the suspension which is to be dewatered and/or washed to be guided and dewatered in the gap formed by the two belts (9, 10) between the dewatering rolls (5, 6) and the guide rolls (7, 8), where the gap runs vertically from bottom to top and a device (15) is provided in the area of this vertical gap to guide the web, characterized in that the dewatering rolls (5, 6) are arranged opposite each other and above a feed container (3), so that part of the circumference of the dewatering rolls (5, 6) protrudes into the container (3) and that the device (15) for guiding the web is designed as guide roll or as guide or sliding plate.

2. Device as per claim 1, characterized in that curved guide plates (21, 22, 23, 24) are arranged above the width of both dewatering rolls (5, 6) so that an adjustably narrowing gap (30, 31) is created in each case between the guide plates (21, 22, 23, 24) and the - specifically endless - wire belts or filter belts (9, 10) running over the surfaces of the dewatering rolls (5,6) and then over the further guide rolls (9, 10), which leads into the vertically ascending gap.

3. Device as per claim 2, characterized in that the guide plates (21, 22, 23, 24) are pivotable.

4. Device as per claim 2 or 3, characterized in that the guide plates are divided into at least two partial sections (21, 23 and/or 22, 24), whose inlet gap (30, 31) is adjustable in relation to the roll surface.

5. Device as per one of the claims 2 to 4, characterized in that at least the fixed part of the guide plates (21, 22) is tightly connected to the container (3) which is mounted below the dewatering rolls (5, 6) and which may have a separate section (27) for receiving the washing liquid, specifically wash water.

6. Device as per one of the claims 1 to 5, characterized in that the dewatering rolls (5, 6) form a roll gap, which may be in the range of up to 100 mm, preferably 2 mm to 20 mm, and which is adjustable.

7. Device as per one of the claims 1 to 6, characterized in that the stock infeed (4, 4') takes place on both sides and separately.

8. Device as per one of the claims 1 to 7, characterized in that the headbox (3) is sealed against the dewatering rolls (5, 6) by radially acting seals (38).

9. Device as per one of the claims 1 to 8, characterized in that the headbox (3) is designed so that it folds down or retracts from the operating position into a cleaning position.

10. Device as per one of the claims 1 to 9, characterized in that behind the vertical gap formed by the belts (9, 10) running over the dewatering rolls (5,6) and the further guide rolls (7,8) a lift-off device (11) specifically a stock discharge screw, is provided after the further guide rolls (7, 8) specifically press rolls, for the filter cake formed from the suspension and/or the fibre mat.

11. Device as per claim 10, characterized in that the walls of the lift-off device (11) are designed as doctors.

12. Device as per one of the claims 1 to 11, characterized in that below the further guide rolls (7, 8), specifically press rolls, filtrate discharges, specifically filtrate trays (43, 44), are provided.

13. Device as per one of the claims 1 to 12, characterized in that, in order to create and control the belt tension, a tension roll (12, 13) is provided in each case after the further guide roll (7, 8), specifically a press roll and ahead of the dewatering roll (5, 6) viewed in the direction of the wire belts or filter belts (9, 10) running over the dewatering rolls (5, 6).

14. Device as per claim 13, characterized in that the tension roll (12, 13) is designed as regulating roll for belt tracking.

15. Device as per one of the claims 1 to 14, characterized in that at least one of the further guide rolls (7, 8) is powered.

16. Device as per claim 15, characterized in that the main load of the drive (32') is taken up by the further guide roll (7, 8), specifically a press roll.

17. Device as per one of the claims 1 to 16, characterized in that the further guide rolls (7, 8) have a smooth surface.

18. Device as per one of the claims 1 to 17, characterized in that the further guide rolls (7, 8) have a rubber-covered surface.

19. Device as per one of the claims 1 to 18, characterized in that the further guide rolls (7, 8) have a grooved surface.

20. Device as per one of the claims 1 to 18, characterized in that the further guide rolls (7, 8) have a surface with blind drillings.

21. Device as per one of the claims 1 to 17, characterized in that the further guide rolls (7, 8) are designed as perforated rolls.

22. Device as per one of the claims 1 to 21, characterized in that a covering cap (20) is provided.

23. Device as per one of the claims 1 to 22, characterized in that the dewatering rolls (5, 6) are designed as perforated rolls.

24. Device as per one of the claims 1 to 23, characterized in that the dewatering rolls (5, 6) have grooves (39) in the roll surface (36).

## Revendications

1. Dispositif de déshydratation et/ou de lavage de suspensions, particulièrement de suspensions de fibres, avec deux rouleaux de déshydratation contrarotatifs (5, 6), où au moins deux rouleaux de guide supplémentaires (7, 8), particulièrement des rouleaux presseurs, sont prévus et où un tamis ou une bande filtrante, particulièrement une bande sans fin (9, 10) est mené(e) via un rouleau de déshydratation (5, 6) respectif, ainsi qu'un rouleau guide supplémentaire respectif (7, 8), et de ce fait, la suspension à déshydrater et/ou à laver se trouve menée et déshydratée dans la fente formée par les deux bandes (9, 10) entre les rouleaux de déshydratation (5, 6) et les rouleaux guide (7, 8), la fente courant verticalement de bas en haut et un dispositif (15) étant prévu dans la portée de cette fente verticale pour guider la nappe, caractérisé en ce que les rouleaux de déshydratation (5,6) sont arrangés l'un en face de l'autre et au-dessus d'un conteneur d'alimentation (3) de façon qu'une partie de la circonférence des rouleaux de déshydratation (5, 6) donne dans le conteneur (3) et que le dispositif (15) pour le guidage de la nappe est étudié en tant que rouleau guide ou tôle guide ou glissante.

2. Dispositif selon la revendication 1, caractérisé en ce que des tôles de guidage courbées (21, 22, 23, 24) se trouvent montées au-dessus des largeurs des deux rouleaux de déshydratation (5, 6), de façon à créer une fente rétrécissante par ajustage (30, 31) entre les tôles de guidage (21, 22, 23, 24) et les tamis ou bandes filtrantes (9, 10), particulièrement sans fin, courant par dessus des surfaces des rouleaux de déshydratation (5, 6) et dans la suite par dessus des rouleaux de guidage supplémentaires (7, 8), cette fente débouchant dans la fente courant verticalement en haut.

3. Dispositif selon la revendication 2, caractérisé en ce que les tôles de guidage (21, 22, 23, 24) sont pivotables.

4. Dispositif selon la revendication 2 ou 3, caractérisé en ce que les tôles de guidage sont divisées au moins en deux parties (21, 23 et/ou 22, 24), la fente d'entrée (30, 31) étant réglable par rapport à la surface du rouleau.

5. Dispositif selon l'une des revendications 2 à 4, caractérisé en ce qu'au moins la partie fixe des tôles de guidage (21, 22) est étroitement connectée au conteneur (3) se trouvant au-dessous des rouleaux de déshydratation (5, 6), servant à la prise du liquide de lavage, particulièrement de l'eau de lavage, et pouvant comporter une section séparée (27).

6. Dispositif selon l'une des revendications 1 à 5, caractérisé en ce que les rouleaux de déshydratation (5, 6) forment un écartement se situant dans une plage allant jusqu'à 100 mm, de préférence entre 2 mm à 20 mm, et étant de forme ajustable.

7. Dispositif selon l'une des revendications 1 à 6, caractérisé en ce que l'amenée de la pâte (4, 4') se fait des deux côtés et séparément.

8. Dispositif selon l'une des revendications 1 à 7, caractérisé en ce que la caisse de tête (3) est obturée par des garnitures (38) agissant radialement par rapport aux rouleaux de déshydratation (5, 6).

9. Dispositif selon l'une des revendications 1 à 8, caractérisé en ce que la caisse de tête (3) est pivotable et/ou rétractable à partir de la position de service à celle de nettoyage.

10. Dispositif selon l'une des revendications 1 à 9, caractérisé en ce qu'après la fente verticale formée par les bandes (9, 10) courant par dessus des rouleaux de déshydratation (5, 6) et des rouleaux guide supplémentaires (7, 8), un dispositif de décharge (11), particulièrement une vis de décharge de pâte, est prévu en aval des rouleaux guide supplémentaires (7, 8), particulièrement des rouleaux de pression, pour le gâteau à filtre ou bien la nappe de fibres, formé(e) à partir de la suspension.

11. Dispositif selon la revendication 10, caractérisé en ce que les parois du dispositif de décharge (11) sont exécutées en tant que racles.

12. Dispositif selon l'une des revendications 1 à 11, caractérisé en ce que des décharges de filtrat, particulièrement des bacholles, (43, 44) sont prévues au-dessous des rouleaux guide supplémentaires (7, 8), particulièrement des rouleaux de pression.

13. Dispositif selon l'une des revendications 1 à 12, caractérisé en ce qu'en direction des tamis ou bandes filtrantes (9, 10) courant par dessus des rouleaux de déshydratation (5, 6) un rouleau tendeur respectif (12, 13) est prévu après le rouleau de guide supplémentaire (7, 8), particulièrement, rouleau de pression, pour créer et réguler la tension de la bande.

14. Dispositif selon la revendication 13, caractérisé en ce que le rouleau de tension (12, 13) est exécuté en forme de rouleau de réglage de centrage de la bande.

15. Dispositif selon l'une des revendications 1 à 14, caractérisé en ce qu'au moins un des rouleaux guide supplémentaires (7, 8) est actionné.

16. Dispositif selon la revendication 15, caractérisé en ce que la charge principale de la commande (32') est reprise par le rouleau guide supplémentaire (7, 8), particulièrement, rouleau de pression.

17. Dispositif selon l'une des revendications 1 à 16, caractérisé en ce que les rouleaux guide supplémentaires (7, 8) ont une surface lisse.

18. Dispositif selon l'une des revendications 1 à 17, caractérisé en ce que les rouleaux guide supplémentaires (7, 8) ont une surface gommée.

19. Dispositif selon l'une des revendications 1 à 18, caractérisé en ce que les rouleaux guide supplémentaires (7, 8) ont une surface rainurée.

20. Dispositif selon l'une des revendications 1 à 18, caractérisé en ce que les rouleaux guide supplémentaires (7, 8) ont une surface avec trous borgnes.

21. Dispositif selon l'une des revendications 1 à 17, caractérisé en ce les rouleaux guide supplémentaires (7, 8) sont exécutés en tant que rouleaux perforés.

22. Dispositif selon l'une des revendications 1 à 21, caractérisé en ce qu'un couvercle (20) est prévu.

23. Dispositif selon l'une des revendications 1 à 22, caractérisé en ce que les rouleaux de déshydratation (5, 6) sont exécutés avec des perforations.

24. Dispositif selon l'une des revendications 1 à 23, caractérisé en ce que les rouleaux de déshydratation (5, 6) ont des rainures (39) dans la surface des rouleaux (36).
